# EUROPEAN PATENT SPECIFICATION

(11) **EP 3 686 861 B1**
(45) Date of publication and mention of the grant of the patent: **24.06.2026**
(21) Application number: 18871288.9
(22) Date of filing: 23.10.2018
(51) Int. Cl.: G08G 1/07, G08G 1/16, G08G 1/01, G08G 1/0967, H04W 4/44, B60W 30/18, B60W 60/00, G08G 1/04, G01S 13/931, G01S 17/931

(54) **VEHICLE MERGING METHOD AND APPARATUS**
VERFAHREN UND VORRICHTUNG ZUR ZUSAMMENFÜHRUNG VON FAHRZEUGEN
PROCÉDÉ ET APPAREIL D'INSERTION DE VÉHICULES

(30) Priority: 25.10.2017 CN 201711009839
(43) Date of publication of application: 29.07.2020
(73) Proprietor: Huawei Technologies Co., Ltd., Longgang District Shenzhen, Guangdong 518129 (CN)
(72) Inventor: ZHOU, Jianli, Shenzhen Guangdong 518129 (CN); LI, Hui, Shenzhen Guangdong 518129 (CN); XIONG, Fuxiang, Shenzhen Guangdong 518129 (CN)
(74) Representative: Gill Jennings & Every LLP
(86) International application number: PCT/CN2018/111471
(87) International publication number: WO 2019/080841

(56) References cited:
- EP-A1- 3 489 785
- WO-A1-2017/087199
- WO-A1-2018/037741
- CN-A- 102 157 072
- CN-A- 104 575 048
- CN-A- 104 575 048
- CN-A- 105 139 677
- CN-A- 106 781 551
- CN-A- 107 886 740
- JP-B2- 6 206 120
- SHUNSUKE AOKI ET AL: "A merging protocol for self-driving vehicles", PROCEEDINGS OF THE 8TH INTERNATIONAL CONFERENCE ON CYBER-PHYSICAL SYSTEMS, ICCPS '17, 1 January 2017 (2017-01-01), New York, New York, USA, pages 219 - 228, XP055617308, ISBN: 978-1-4503-4965-9, DOI: 10.1145/3055004.3055028

## Description

### TECHNICAL FIELD

This application relates to the field of wireless communications technologies, and in particular, to a vehicle merging method and apparatus.

### BACKGROUND

Vehicle merging is a common scenario of traffic. For example, there is a vehicle merging scenario at a T junction in which vehicles on two lanes merge into one lane, or a vehicle on an auxiliary lane merges into a main road. Currently, in a vehicle merging scenario, a passing sequence and a driving policy are generally determined by a driver of a vehicle or an intelligent vehicle capable of automatic driving. For example, if an intelligent vehicle A on a lane A and an intelligent vehicle B on a lane B are about to merge into a lane C, a conflict may easily occur in passing sequences and driving policies determined by the intelligent vehicle A and the intelligent vehicle B. For example, the intelligent vehicle A and the intelligent vehicle B both determine that themselves are to enter the lane C first or that the other is to enter the lane C first. As a result, it is possible that the two vehicles collide or wait for each other in a vehicle merging process. Therefore, safety and vehicle merging efficiency cannot be both ensured in a prior-art vehicle merging process.

CN 106781551 A and CN 104575048 A both describe a merging method having the features of the pre-characterizing portion of the independent claims of this specification. EP 3489785 A1 is prior art for novelty only, under Article 54(3) EPC, and also describes the features of the pre-characterizing portion of the independent claims. Shunsuke Aoki ET AL: "A merging protocol for self-driving vehicles"; XP055617308 describes a merging protocol for self-driving vehicles.

### SUMMARY

Embodiments of this application provide a vehicle merging apparatus as set forth in the claims, to resolve a problem that safety and vehicle merging efficiency cannot be both ensured in a prior-art vehicle merging process.

To achieve the foregoing objective, the following technical solutions are used in the embodiments of this application.

An embodiment of this application provides a vehicle merging apparatus as set out in claim 1.

According to the embodiment, the vehicle merging apparatus obtains the merging priority of each vehicle in the merging area, and then controls a vehicle with a highest merging priority to merge and controls another vehicle to stop or to slow down. In this way, a possibility of vehicle collision caused due to incorrect judgment in a merging process can be reduced. In addition, the traffic control unit controls vehicle passing by sending an instruction to a vehicle, making the vehicle pass a merging junction orderly, thereby avoiding a phenomenon that the vehicles wait for each other because the vehicles themselves determine whether to pass or not, and improving vehicle merging efficiency while ensuring safety.

The merging area is a junction area in which at least two lanes merge into one lane or a roundabout area. A size of the merging area may be preset by the traffic control unit or may be determined by the traffic control unit according to a map.

The merging priority represents a sequence in which a vehicle in the merging area passes the merging junction. For example, if a merging priority of a vehicle A is higher than a passing priority of a vehicle B, the vehicle A takes priority to pass the merging junction.

Using a merging scenario at a T junction as an example, when both a vehicle on a lane 1 and a vehicle on a lane 2 merge into a lane 3, and a right-of-way level of the lane 1 is the same as a right-of-way level of the lane 2, the traffic control unit may determine a passing sequence of vehicles in the merging area according to a principle of zipper merge. If the first vehicle is a vehicle on the lane 1 at the T junction, there is no vehicle waiting to merge ahead of the first vehicle on the lane 1 in the travel direction of the first vehicle, the second vehicle is a vehicle on the lane 2 at the T junction, there is no vehicle waiting to merge ahead of the second vehicle on the lane 2 in a travel direction of the second vehicle, and the traffic control unit determines that a last vehicle that has merged is from the lane 1, the vehicle on the lane 2 takes priority to merge, and in this case, the merging priority of the second vehicle is higher than the merging priority of the first vehicle.

Optionally, after receiving the second instruction, the first vehicle may generate a control parameter based on the second instruction, travel information of the first vehicle, and collected road condition information, and then perform driving according to the control parameter. The first vehicle may alternatively report the control parameter to the traffic control unit.

In a possible implementation, if there is in the merging area a second vehicle that is merging ahead of the first vehicle in a travel direction of the first vehicle, it is determined that a merging priority of the second vehicle is higher than the merging priority of the first vehicle.

If the second vehicle is closer to the merging junction than the first vehicle, or the second vehicle is merging according to an instruction, the merging priority of the second vehicle is higher than the merging priority of the first vehicle.

In another possible implementation, if it is determined that a right-of-way level of a lane that the second vehicle is taking is higher than a right-of-way level of a lane that the first vehicle is taking, it is determined that there is in the merging area a second vehicle whose merging priority is higher than the merging priority of the first vehicle.

Using a scenario in which a vehicle on an auxiliary lane merges into a main road as an example, in the merging area, if the first vehicle is on the auxiliary lane and the second vehicle is on the main road, and a merging priority of a vehicle on the main road is higher than a merging priority of a vehicle on the auxiliary lane, the merging priority of the second vehicle is higher than the merging priority of the first vehicle.

In another possible implementation, the merging area is a roundabout area, and the first vehicle and the second vehicle are on two different lanes in the merging area. If the merge request is received from the first vehicle and no merge request is received from the second vehicle, it is determined that the merging priority of the second vehicle is higher than the merging priority of the first vehicle.

At a roundabout, a vehicle that does not change lane is required to yield to a vehicle that changes lane. When a vehicle in the merging area needs to change lane, the vehicle may send a merge request to the traffic control unit. When the traffic control unit receives the merge request from the first vehicle and receives no merge request from the second vehicle, it indicates that the first vehicle is about to change lane and the second vehicle does not change lane. Therefore, the merging priority of the second vehicle is higher than the merging priority of the first vehicle.

In a possible implementation, after sending the second instruction to the first vehicle, the traffic control unit may further receive feedback information from the first vehicle, where the feedback information is used to indicate that the first vehicle has merged. After determining that the first vehicle has merged, the traffic control unit may control, by sending an instruction, a next vehicle with a highest merging priority in the merging area to merge, so that the vehicles in the merging area can pass the merging junction safely and orderly.

According to the embodiment, the first vehicle does not need to determine a sequence in which the first vehicle and another vehicle pass a merging junction, but performs driving according to an instruction from the traffic control unit. In this way, a possibility of vehicle collision caused due to incorrect judgment in a merging process can be reduced. In addition, the traffic control unit controls vehicle passing by sending an instruction to a vehicle, making the vehicle pass a merging junction orderly, thereby avoiding a phenomenon that the vehicles wait for each other because the vehicles themselves determine whether to pass or not, and improving vehicle merging efficiency while ensuring safety.

In a possible implementation, the first vehicle may send feedback information to the traffic control unit after the first vehicle merges according to the second instruction, where the feedback information is used to indicate that the first vehicle has merged. In this way, after determining that the first vehicle has merged, the traffic control unit controls, by sending an instruction, a next vehicle with a highest merging priority in a merging area to merge, so that vehicles in the merging area can pass the merging junction safely and orderly.

In a possible design, the apparatus is a vehicle control device, where the vehicle control device includes a processor. The processor is configured to support the vehicle control device in performing a corresponding function in the foregoing methods. Further, the vehicle control device may further include a communications interface, where the communications interface is configured to support communication between the vehicle control device and a first vehicle or any vehicle in a merging area and communication between the vehicle control device and a roadside sensor in the merging area. Further, the vehicle control device may further include a memory, where the memory is configured to be coupled to the processor and stores a program instruction and data necessary for the vehicle control device.

According to a second aspect, an embodiment of this application provides a vehicle merging system.

In comparison to a problem that safety and vehicle merging efficiency cannot be both ensured in a prior-art vehicle merging process, in embodiments of this application, a sequence in which a vehicle passes a merging junction is not determined by the vehicle or a driver of the vehicle, but the traffic control unit determines a merging priority of each vehicle in a merging area, and then controls a vehicle with a highest merging priority to merge and controls another vehicle to stop or to slow down. In this way, a possibility of vehicle collision caused due to incorrect judgment in a merging process can be reduced. In addition, the traffic control unit controls vehicle passing by sending an instruction to a vehicle, making the vehicle pass a merging junction orderly, thereby avoiding a phenomenon that the vehicles wait for each other because the vehicles themselves determine whether to pass or not, and improving vehicle merging efficiency while ensuring safety.

### BRIEF DESCRIPTION OF DRAWINGS

FIG. 1 is a schematic structural diagram of a vehicle merging system according to an embodiment of this application;
FIG. 2 is an example schematic diagram of a vehicle merging scenario according to an embodiment of this application;
FIG. 3 is an example schematic diagram of another vehicle merging scenario according to an embodiment of this application;
FIG. 4 is an example schematic diagram of another vehicle merging scenario according to an embodiment of this application;
FIG. 5 is an example schematic diagram of another vehicle merging scenario according to an embodiment of this application;
FIG. 6 is a flowchart of a vehicle merging method according to an embodiment of this application;
FIG. 7 is an example schematic diagram of another vehicle merging scenario according to an embodiment of this application;
FIG. 8 is a flowchart of another vehicle merging method according to an embodiment of this application;
FIG. 9 is a flowchart of another vehicle merging method according to an embodiment of this application;
FIG. 10 is a schematic structural diagram of an apparatus according to an embodiment of this application;
FIG. 11 is a schematic structural diagram of a traffic control unit according to an embodiment of this application;
FIG. 12 is a schematic structural diagram of another apparatus according to an embodiment of this application; and
FIG. 13 is a schematic structural diagram of a first vehicle according to an embodiment of this application.

### DESCRIPTION OF EMBODIMENTS

The following further describes this application in detail with reference to accompanying drawings, a specific operation method in a method embodiment may also be applied to an apparatus embodiment or a system embodiment. In descriptions of this application, unless otherwise noted, "a plurality of" means two or more than two.

A system architecture and a service scenario described in this application are intended to more clearly describe the technical solutions in this application, but do not constitute a limitation on the technical solutions provided in this application. A person of ordinary skill in the art may know that as a system architecture evolves and a new service scenario emerges, the technical solutions provided in this application are also applicable to a similar technical problem.

It should be noted that, in this application, the word "example", "for example", or the like is used to represent giving an example, an illustration, or a description. Any embodiment or design scheme described as "example" or "for example" in this application should not be explained as being more preferred or having more advantages than another embodiment or design scheme. Exactly, use of the word "example", "for example", or the like is intended to present a related concept in a specific manner.

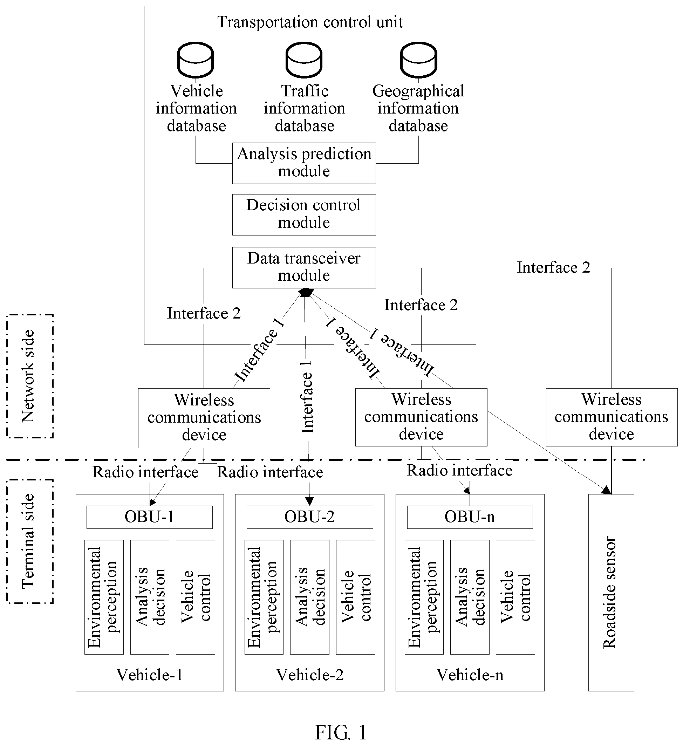

FIG. 1 is a possible schematic diagram of a vehicle merging system according to an embodiment of this application. The system includes a transportation control unit (Transportation Control Unit, TCU), a wireless communications device, and a vehicle, and optionally, the system further includes a roadside sensor.

The transportation control unit may be a dedicated device that is deployed at a network side and that is configured to manage transportation, or may be a functional component in a mobile edge computing (Mobile Edge Computing, MEC) device. The transportation control unit is configured to collect, store, and analyze data from a vehicle, a road side unit, or another device, and generate a dynamic traffic status map based on the data, and can predict a travel track of the vehicle to determine a potential risk, and deliver an instruction to a vehicle in a merging area, so that vehicles in the merging area can pass a merging junction safely and orderly according to received instructions.

Optionally, the transportation control unit may include the following several modules.

A vehicle information database is configured to store collected travel information of traffic participants in the merging area. The traffic participants include a vehicle, a pedestrian, and the like, and the travel information includes travel statuses, locations, travel speeds, travel intentions, and the like of the traffic participants.

A traffic information database is configured to store traffic information reported by the roadside sensor in the merging area. The traffic information includes a road condition, a traffic signal, obstacle information, weather, and the like.

A geographical information database is configured to store a high definition map.

An analysis prediction module is configured to: analyze data stored in the vehicle information database, the traffic information database, and the geographical information database, and predict a potential risk between the traffic participants. For example, a collision probability, a collision time, and a collision location of two vehicles can be determined by predicting travel tracks of the vehicles.

A decision control module is configured to generate an instruction for a vehicle in the merging area based on an analysis result from the analysis prediction module.

A data transceiver module is configured to support communication between the transportation control unit and another device.

The vehicle in the system may receive the instruction delivered by the transportation control unit, and perform driving according to the received instruction, or generate a control parameter based on the received instruction and information collected by the vehicle, and perform driving according to the control parameter. The vehicle is further configured to report travel information of the vehicle in real time. In this embodiment of this application, the vehicles are all intelligent vehicles with a wireless communication function, and automatic control on the vehicles can be implemented. The vehicles can perform wireless communication with the transportation control unit by using a wireless communications device (such as a base station), receive an instruction delivered by the transportation control unit, and perform driving according to the received instruction.

The vehicle may include the following modules.

An on-board unit (On-Board Unit, OBU) may be on board, or may be in a form in which a telematics box (Telematics Box, T-Box) is combined with a smartphone. The on-board unit may obtain travel information of the on-board unit and send the travel information to the transportation control unit in real time. The on-board unit may receive risk data, such as data of a warning, an incident, a signal light, and a sign, and prompt a driver in a manner of voice, a video, and the like. The on-board unit may also receive the instruction delivered by the transportation control unit and transmit the instruction to a vehicle control module, and the vehicle control module performs automatic driving according to the instruction.

An environment perception module is configured to obtain status information, recognized by the roadside sensor and an on-board sensor, of a vehicle, a pedestrian, and an object on a road. The roadside sensor and the on-board sensor each may be a camera, laser radar, millimeter-wave radar, or the like. Data obtained by the environment perception module may be a collected raw video stream, point cloud data of radar, or analyzed structural data of locations, speeds, turning angles, and sizes of a pedestrian, a vehicle, and an object. For the raw video stream data and the point cloud data of radar, the environment perception module may process the data into recognizable structural data of the locations, the speeds, the turning angles, the sizes, and the like of the pedestrian, the vehicle, and the object.

An analysis decision module is configured to: based on the travel information of the vehicle and/or the instruction delivered by the transportation control unit, analyze a potential risk in a vehicle driving process, and generate a vehicle control parameter.

A vehicle control module is configured to implement automatic control/semi-automatic control on the vehicle according to a control parameter provided by the driver and/or the analysis decision module.

The wireless communications device in the system may be a base station, and is configured to support wireless communication between the vehicle, the roadside sensor, and the transportation control unit.

A communications interface is configured to support data transmission between the transportation control unit, the wireless communications device, and the roadside sensor. An interface 1 is an application layer interface for communication between the vehicle and the transportation control unit. The vehicle may report the travel information to the transportation control unit through the interface 1, and the transportation control unit may deliver the instruction to the vehicle through the interface 1. An interface 2 is an interface between the transportation control unit and the wireless communications device. Communication delays, reliability, and bandwidth between the vehicle, the roadside sensor, and the transportation control unit can be ensured by adapting these interfaces. A radio interface is an air interface in mobile communication. Specifically, the radio interface is a specification for wireless transmission between the wireless communications device and the vehicle, and is configured to define using frequency, bandwidth, an access time, an encoding method, and a handover of each wireless channel.

It should be noted that FIG. 1 shows an example in which there are three wireless communications devices, three vehicles, and one roadside sensor. A quantity of devices in the vehicle merging system shown in FIG. 1 is not limited in this application.

A vehicle merging method provided in an embodiment of this application is applied to a vehicle merging scenario. For example, this embodiment of this application provides four possible vehicle merging scenarios.

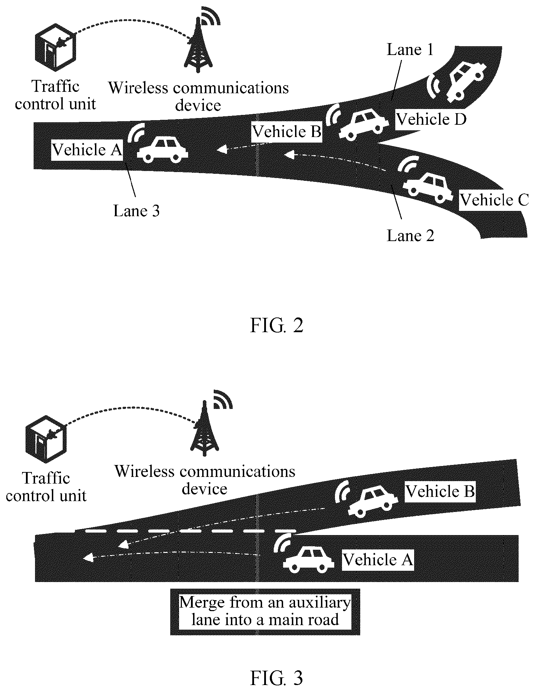

Scenario 1: A merging area is a T junction. As shown in FIG. 2, a vehicle on a lane 1 and a vehicle on a lane 2 merge into a lane 3 through the T junction. For example, a vehicle B, a vehicle C, and a vehicle D all are about to merge into the lane 3.

Scenario 2: A vehicle on an auxiliary lane merges into a main road. As shown in FIG. 3, a vehicle B on the auxiliary lane is about to merge into the main road.

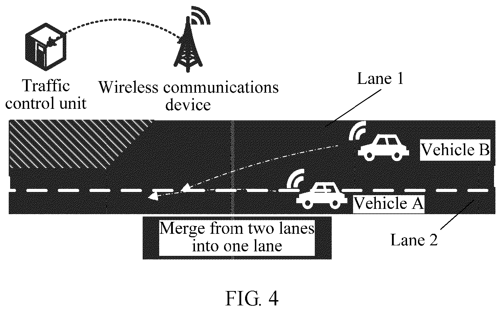

Scenario 3: There are two parallel lanes in a merging area, and a vehicle on one of the lanes needs to merge into the other lane due to an obstacle, or the like. As shown in FIG. 4, a lane 1 and a lane 2 are parallel lanes, and a vehicle on the lane 1 needs to merge into the lane 2 due to an obstacle on the lane 1, or the like.

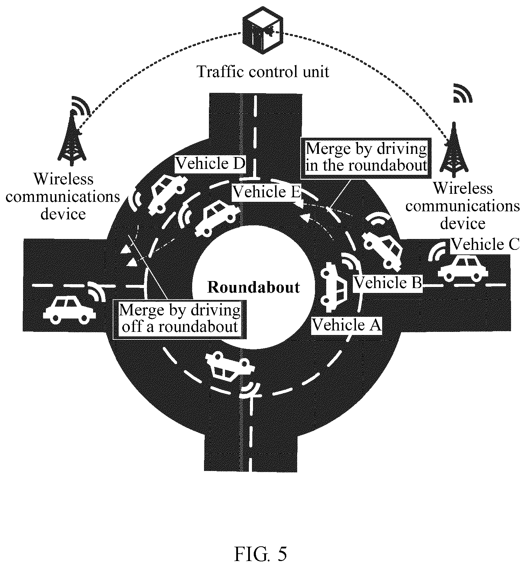

Scenario 4: A vehicle drives into a roundabout or drives off a roundabout. As shown in FIG. 5, a merging scenario of driving into the roundabout may be a scenario in which a vehicle B on an outside lane drives into an inside lane, and a merging scenario of driving off the roundabout may be a scenario in which a vehicle E drives into the outside lane from the inside lane.

The following explains some terms used in this application, to facilitate understanding.

### (1) Merging area

The merging area is a junction area in which at least two lanes merge into one lane. A size of the merging area may be preset by a traffic control unit or determined by a traffic control unit according to a map, and this is not limited in this application. For example, the merging area is any one of the areas shown in FIG. 2 to FIG. 5.

Optionally, the merging area is not limited to that in the foregoing four scenarios, and may alternatively be an area preset in the traffic control unit.

### (2) Merging priority

The merging priority may represent a sequence in which a vehicle in a merging area passes a merging junction. For example, if a merging priority of a vehicle A is higher than a passing priority of a vehicle B, the vehicle A takes priority to pass the merging junction.

### (3) Right-of-way level

The right-of-way level may represent a passing sequence of vehicles on different lanes. A vehicle on a lane with a lower right-of-way level needs to yield to a vehicle on a lane with a higher right-of-way level.

For example, in the foregoing scenario 1, the merging area is the T junction, and a right-of-way level of the lane 1 is the same as a right-of-way level of the lane 2.

In the foregoing scenario 2, because the vehicle on the auxiliary lane needs to merge into the main road and a vehicle on the main road still drives straight, a vehicle that changes lane needs to yield to a vehicle that drives straight, and a right-of-way level of the auxiliary lane is lower than a right-of-way level of the main road.

In the foregoing scenario 3, because the vehicle on the lane 1 needs to merge into the lane 2 and a vehicle on the lane 2 still drives straight, a vehicle that changes lane needs to yield to a vehicle that drives straight, and a right-of-way level of the lane 1 is lower than a right-of-way level of the lane 2.

In the foregoing scenario 4, a vehicle that changes lane needs to yield to a vehicle that does not change lane. However, both a vehicle on the inside lane and a vehicle on the outside lane are possible to change lanes, and in this case, right-of-way levels of the inside lane and the outside lane are not ranked.

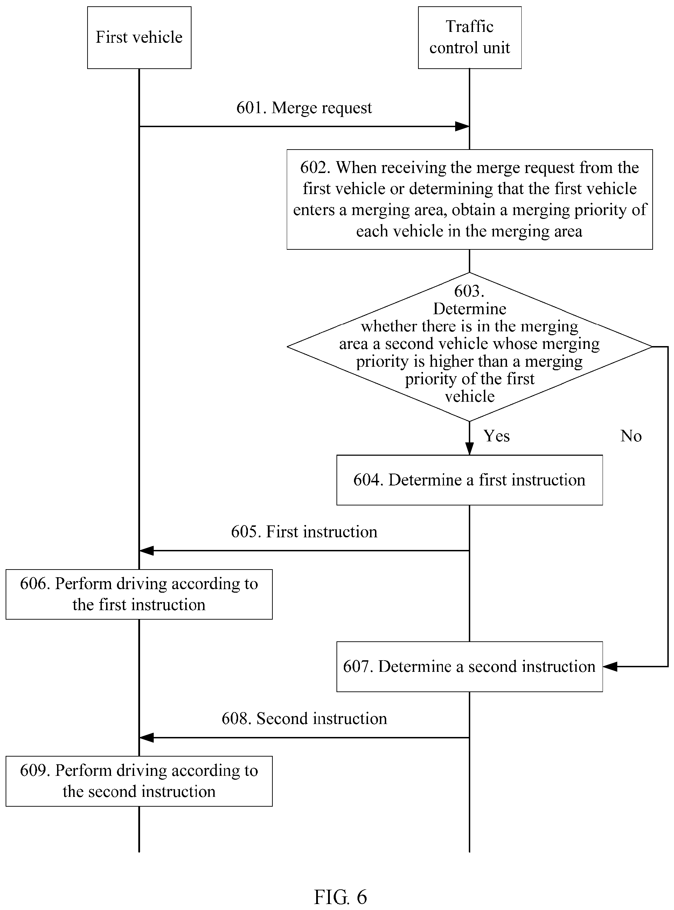

To ensure both vehicle safety and merging efficiency in a vehicle merging process, an embodiment of this application provides a vehicle merging method. The method is described by using an example in which a transportation control unit is a traffic control unit. As shown in FIG. 6, the method includes the following steps.

Step 601: A first vehicle sends a merge request to the traffic control unit. Correspondingly, the traffic control unit receives the merge request from the first vehicle.

In the foregoing scenario 4, not all vehicles that enter the merging area are vehicles that need to merge. When the first vehicle needs to change lane, the first vehicle sends the merge request to the traffic control unit.

Step 602: When the traffic control unit receives the merge request from the first vehicle or determines that the first vehicle enters a merging area, obtain a merging priority of each vehicle in the merging area.

Step 603: Determine whether there is in the merging area a second vehicle whose merging priority is higher than a merging priority of the first vehicle.

If a determining result is yes, step 604 to step 606 are performed, or if a determining result is no, step 607 to step 609 are performed.

Step 604: If the traffic control unit determines that there is in the merging area a second vehicle whose merging priority is higher than the merging priority of the first vehicle, determine a first instruction, where the first instruction is used to control the first vehicle to slow down or to stop, so that the second vehicle takes priority to merge.

When it is determined that there is in the merging area the second vehicle whose merging priority is higher than the merging priority of the first vehicle, there are the following several cases.

Case 1: If it is determined that there is in the merging area a second vehicle that is merging ahead of the first vehicle in a travel direction of the first vehicle, it is determined that a merging priority of the second vehicle is higher than the merging priority of the first vehicle.

That there is a second vehicle ahead of the first vehicle in the travel direction of the first vehicle means: in the travel direction of the first vehicle, there is the second vehicle whose head is ahead of a head of the first vehicle.

For example, in the foregoing scenario 1, in FIG. 2, the vehicle C and a vehicle D each may serve as the first vehicle. That the vehicle D is the first vehicle is used as an example. The traffic control unit may determine that the vehicle B is ahead of the vehicle D in a travel direction of the vehicle D and the vehicle B is merging, and in this case, a merging priority of the vehicle B is higher than a merging priority of the vehicle D, and a first instruction determined by the traffic control unit for the vehicle D is to slow down or to stop, so that the vehicle B takes priority to merge. It can be understood that, in FIG. 2, a first instruction determined by the traffic control unit for the vehicle C is also to slow down or to stop. After it is determined that the vehicle B has merged, the traffic control unit may send instructions to the vehicle C and the vehicle D again based on latest traffic status information.

Case 2: If it is determined that a right-of-way level of a lane that the second vehicle is taking is higher than a right-of-way level of a lane that the first vehicle is taking, it is determined that there is in the merging area a second vehicle whose merging priority is higher than the merging priority of the first vehicle.

For example, in the foregoing scenario 2, that is, the scenario in which the vehicle on the auxiliary lane merges into the main road, a right-of-way level of the main road is higher than a right-of-way level of the auxiliary lane, and in this case, a merging priority of a vehicle on the main road is higher than a merging priority of the vehicle on the auxiliary lane. In other words, in FIG. 3, a merging priority of a vehicle A is higher than a merging priority of the vehicle B.

For another example, in the foregoing scenario 3, that is, the scenario in which the vehicle on the lane 1 needs to merge into the lane 2, a right-of-way level of the lane 2 is higher than a right-of-way level of the lane 1, and in this case, a merging priority of a vehicle on the lane 2 is higher than a merging priority of the vehicle on the lane 1. In other words, in FIG. 4, a passing priority of a vehicle A is higher than a passing priority of a vehicle B.

Case 3: The merging area is a roundabout area, and the first vehicle and the second vehicle are on two different lanes in the merging area. If the merge request is received from the first vehicle and no merge request is received from the second vehicle, it is determined that the merging priority of the second vehicle is higher than the merging priority of the first vehicle.

When a vehicle needs to change lane, the vehicle sends a merge request to the traffic control unit. Therefore, a vehicle that sends a merge request is a vehicle that needs to change lane and a vehicle that does not send a merge request is a vehicle that does not need to change lane. According to a principle that a merging priority of a vehicle that does not change lane is higher than a merging priority of a vehicle that changes lane, for vehicles on two different lanes, a merging priority of the vehicle that does not send a merge request is higher than a merging priority of the vehicle that sends a merge request.

For example, in the foregoing scenario 4, in FIG. 5, the vehicle B is about to drive into the roundabout, that is, the vehicle B needs to drive into the inside lane from the outside lane, and there is a vehicle A that does not need to change lane on the inside lane. In this case, a merging priority of the vehicle A is higher than a merging priority of the vehicle B. In FIG. 5, the vehicle E is about to drive off the roundabout, that is, the vehicle E needs to drive into the outside lane from the inside lane, and there is a vehicle D that does not need to change lane on the outside lane. In this case, a merging priority of the vehicle D is higher than a merging priority of the vehicle E.

Case 4: It is determined whether a right-of-way level of a lane that the first vehicle is taking is the same as a right-of-way level of a lane that the second vehicle is taking. If it is determined that the right-of-way level of the lane that the first vehicle is taking is the same as the right-of-way level of the lane that the second vehicle is taking, it is determined whether a last vehicle merging in the merging area drives off the lane that the first vehicle is taking. If it is determined that the last vehicle merging in the merging area drives off the lane that the first vehicle is taking, it is determined that the merging priority of the second vehicle is higher than the merging priority of the first vehicle.

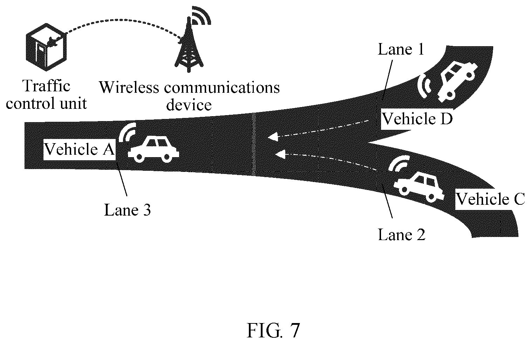

For example, in the foregoing scenario 1, as shown in FIG. 7, a right-of-way level of a lane 1 is the same as a right-of-way level of a lane 2, and in this case, the traffic control unit determines a passing sequence of a vehicle C and a vehicle D according to a principle of zipper merge. A vehicle A in FIG. 7 is a last vehicle that has merged, and if the traffic control unit determines that the vehicle A has merged into a lane 3 from a lane that the vehicle D is taking, it is determined that a merging priority of the vehicle C is higher than a merging priority of the vehicle D.

Step 605: The traffic control unit sends the first instruction to the first vehicle. Correspondingly, the first vehicle receives the first instruction.

Step 606: The first vehicle performs driving according to the first instruction.

It can be understood that if the first vehicle receives the first instruction, the first vehicle slows down or stops according to the first instruction and the second vehicle takes priority to merge. Then, the traffic control unit determines an instruction again for the first vehicle based on real-time traffic status information. When the first vehicle is a vehicle with a highest merging priority in the merging area, the traffic control unit may send a second instruction to the first vehicle, and then the first vehicle performs merging according to the second instruction.

Step 607: If the traffic control unit determines that there is in the merging area no second vehicle whose merging priority is higher than the merging priority of the first vehicle, determine a second instruction, where the second instruction is used to control the first vehicle to merge.

For example, in the foregoing scenario 1, as shown in FIG. 7, if the first vehicle is the vehicle D, the right-of-way level of the lane 1 is the same as the right-of-way level of the lane 2, the vehicle A in FIG. 7 is the last vehicle that has merged, and the traffic control unit determines that the vehicle A has merged into the lane 3 from a lane that the vehicle C is taking, it may be determined that the vehicle D is a vehicle with a highest merging priority in the merging area. It can be understood that a case in which there is in the merging area no second vehicle whose merging priority is higher than the merging priority of the first vehicle is not limited to a first scenario, and details are not described herein by using examples.

Step 608: The traffic control unit sends the second instruction to the first vehicle. Correspondingly, the first vehicle receives the second instruction.

Step 609: The first vehicle performs driving according to the second instruction.

Optionally, the first vehicle may further generate a control parameter based on the second instruction, travel information of the first vehicle, and information collected by an environmental perception module in the vehicle, and perform driving according to the control parameter.

According to the vehicle merging method provided in this embodiment of this application, in comparison to a problem that safety and vehicle merging efficiency cannot be both ensured in a prior-art vehicle merging process, in this embodiment of this application, a sequence in which a vehicle passes a merging junction is not determined by the vehicle or a driver of the vehicle, but the traffic control unit determines a merging priority of each vehicle in a merging area, and then controls a vehicle with a highest merging priority to merge and controls another vehicle to stop or to slow down. In this way, a possibility of vehicle collision caused due to incorrect judgment in a merging process can be reduced. In addition, the traffic control unit controls vehicle passing by sending an instruction to a vehicle, making the vehicle pass a merging junction orderly, thereby avoiding a phenomenon that the vehicles wait for each other because the vehicles themselves determine whether to pass or not, and improving vehicle merging efficiency while ensuring safety.

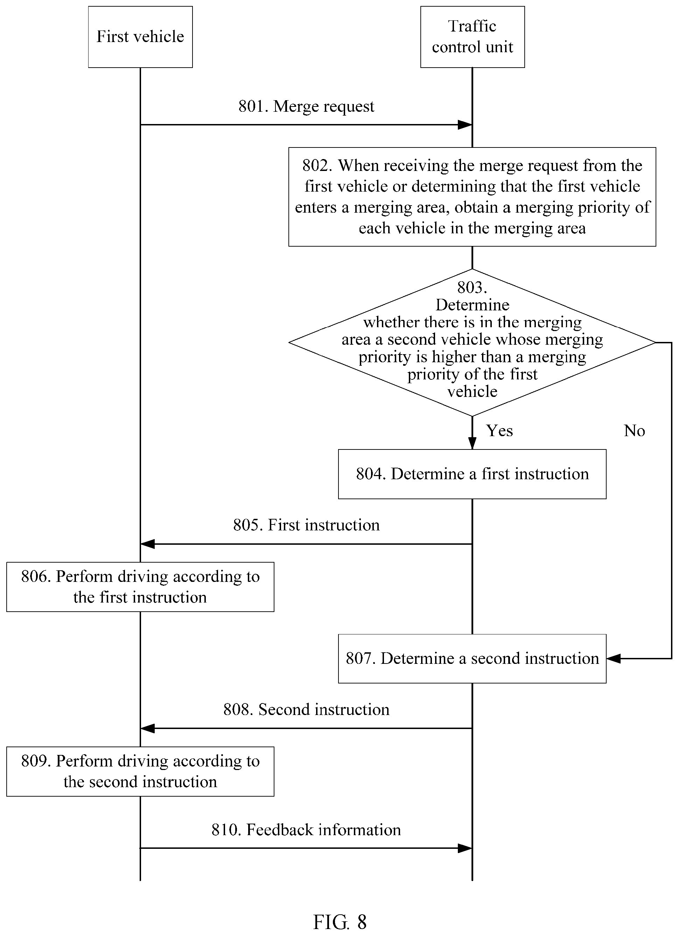

Optionally, the traffic control unit can obtain travel information of vehicles in real time, and then can accurately determine a passing sequence of each vehicle in a merging area. Therefore, the first vehicle may provide a notification to the traffic control unit after having merged. Based on this, in another implementation in this embodiment of this application, as shown in FIG. 8, the method includes step 801 to step 810.

For step 801 to step 809, refer to related descriptions in the foregoing step 601 to step 609. Certainly, this application is not limited thereto.

Step 810: The first vehicle sends feedback information to the traffic control unit, where the feedback information is used to indicate that the first vehicle has merged. Correspondingly, the traffic control unit receives the feedback information.

Optionally, after receiving the first instruction or the second instruction, the first vehicle may alternatively feed back, to the traffic control unit, information such as whether the first instruction or the second instruction is received and whether the first vehicle performs driving according to the first instruction or the second instruction. For example, if the first vehicle does not merge directly according to the second instruction after receiving the second instruction, but generates a control parameter based on the second instruction, the travel information of the first vehicle, and other information collected by the first vehicle, and then performs merging according to the control parameter, the first vehicle may report the control parameter to the traffic control unit, so that the traffic control unit adjusts a passing policy for another vehicle in the merging area in real time.

According to the method, after determining that the first vehicle has merged, the traffic control unit may control, by sending an instruction, a next vehicle with a highest merging priority in the merging area to merge, so that the vehicles in the merging area can pass the merging junction safely and orderly.

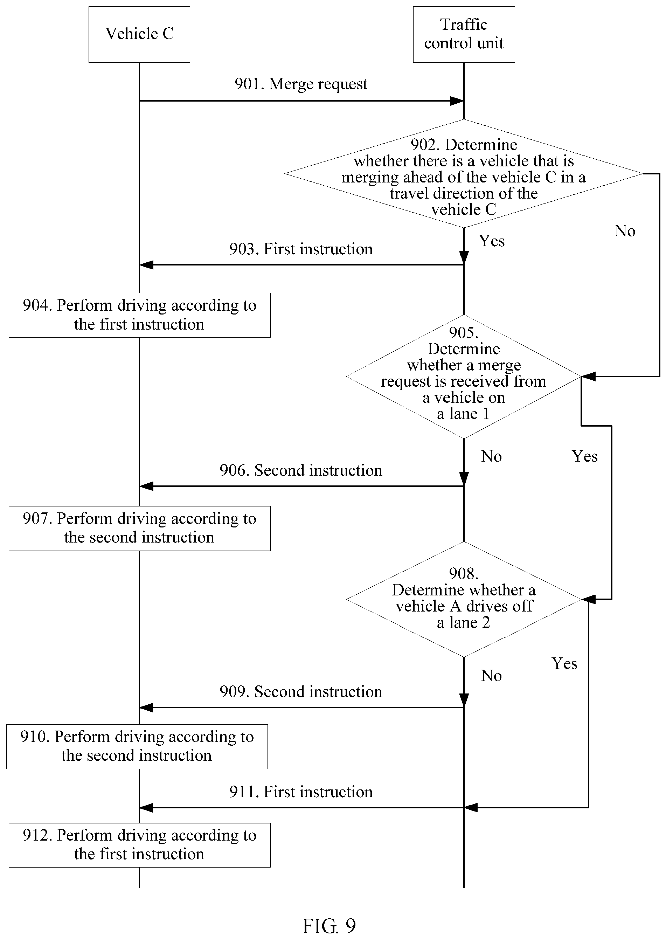

With reference to a specific scenario, the following describes a vehicle merging method provided in an embodiment of this application. Using the scenario 1 corresponding to FIG. 7 as an example, as shown in FIG. 9, the method includes the following steps.

Step 901: The vehicle C sends a merge request to the traffic control unit. Correspondingly, the traffic control unit receives the merge request.

Step 902: The traffic control unit determines whether there is a vehicle that is merging ahead of the vehicle C in a travel direction of the vehicle C.

If it is determined that there is a vehicle that is merging ahead of the vehicle C in a travel direction of the vehicle C, step 903 and step 904 are performed; or if it is determined that there is no vehicle that is merging ahead of the vehicle A in a travel direction of the vehicle A, step 905 is performed.

It should be noted that the traffic control unit determines real-time traffic status information based on travel information reported by each vehicle in a merging area, road condition information reported by a roadside sensor, and map information of the merging area. The real-time traffic status information may be in a form of a dynamic traffic status map, and the dynamic traffic status map includes information about a traffic signal light, a location of each vehicle, and travel information of each vehicle in the merging area. The traffic control unit may determine, based on the real-time traffic status information, whether there is a vehicle that is merging ahead of the vehicle C in the travel direction of the vehicle C. For example, in FIG. 7, ahead of the vehicle C, there is only one vehicle A that has merged and no vehicle that is merging.

Step 903: The traffic control unit sends a first instruction to the vehicle C, where the first instruction is used to control the vehicle C to slow down or to stop. Correspondingly, the vehicle C receives the first instruction.

Optionally, the traffic control unit may predict a travel track of each vehicle in the merging area based on the real-time traffic status information, determine a possibility of collision between the vehicles and a geographical location and time at which collision possibly occurs, and generate instructions for the vehicles with reference to the information and determined merging priorities of the vehicles. For example, in step 903, if there is a vehicle B that is merging ahead of the vehicle C, the traffic control unit may predict travel tracks of the vehicle C and the vehicle B, determine a possibility of collision between the vehicle C and the vehicle B and a geographical location and time at which collision possibly occurs, and generate the first instruction based on the information. The first instruction may include information such as a travel speed and a travel direction of the vehicle C.

Step 904: The vehicle C performs driving according to the first instruction.

Step 905: The traffic control unit determines whether a merge request is received from a vehicle on the lane 1.

If it is determined that no merge request is received from the vehicle D on the lane 1, step 906 and step 907 are performed; or if it is determined that the merge request is received from the vehicle on the lane 1, step 908 is performed.

For example, in FIG. 7, the traffic control unit receives the merge request from the vehicle D and needs to further determine merging priorities of the vehicle C and the vehicle D. It should be noted that when the traffic control unit determines a passing sequence for a vehicle in the merging area, there are two possible trigger conditions. One is receiving a merge request from the vehicle, the other is determining that the vehicle enters the merging area. In the embodiment corresponding to FIG. 9, all descriptions are provided by using an example in which a trigger condition is receiving a merge request from a vehicle.

Step 906: The traffic control unit sends a second instruction to the vehicle C, where the second instruction is used to control the vehicle C to merge. Correspondingly, the vehicle C receives the second instruction.

Optionally, the second instruction may include information such as the travel speed and a passing time window of the vehicle C. The passing time window is used to specify that the vehicle C completes merging in a specified time period.

Step 907: The vehicle C performs driving according to the second instruction.

Step 908: The traffic control unit determines whether the vehicle A drives off the lane 2.

If the vehicle A does not drive off the lane 2, step 909 and step 910 are performed. If the vehicle A drives off the lane 2, step 911 and step 912 are performed.

Step 909: The traffic control unit sends the second instruction to the vehicle C, where the second instruction is used to control the vehicle C to merge. Correspondingly, the vehicle C receives the second instruction.

It should be noted that FIG. 7 is used as an example, if the vehicle A drives off the lane 1, the traffic control unit may send a third instruction to the vehicle D according to a principle of zipper merge, where the third instruction is used to control the vehicle D to slow down or to stop, so that the vehicle C takes priority to merge.

Optionally, after receiving the second instruction, the vehicle C needs to feed back, to the traffic control unit, whether the vehicle C has received the second instruction and whether the vehicle C performs driving according to the second instruction. If the vehicle C generates a new control parameter based on the second instruction, travel information of the vehicle C, and the like, the vehicle C may send the control parameter to the traffic control unit. For example, if a travel speed in the traffic control parameter is higher than a travel speed in the second instruction, the traffic control unit may adjust a passing policy of the vehicle D, for example, resending one third instruction to the vehicle D to control the vehicle D to speed up.

Optionally, if the vehicle C feeds back fault information to the traffic control unit, the traffic control unit may resend instructions to the vehicle C and the vehicle D, so as to control the vehicle C to stop, that is, stop merging, and control the vehicle D to merge.

Step 910: The vehicle C performs driving according to the second instruction.

Step 911: The traffic control unit sends a first instruction to the vehicle C, where the first instruction is used to control the vehicle C to slow down or to stop. Correspondingly, the vehicle C receives the first instruction.

It should be noted that FIG. 7 is used as an example, if the vehicle A drives off the lane 2, the traffic control unit may send a fourth instruction to the vehicle D according to the principle of zipper merge, where the fourth instruction is used to control the vehicle D to merge.

Step 912: The vehicle C performs driving according to the first instruction.

According to the method, the traffic control unit may manage and control a passing sequence and passing speeds of vehicles in the merging area together, avoiding a problem of low safety and low merging efficiency caused due to incorrect judgment occurring when the vehicles themselves determine the passing sequence and the passing speeds, so that the vehicles in the merging area can pass the merging area safely, orderly, and efficiently.

The foregoing describes the solution provided in the embodiments of the present invention from a perspective of interaction between different network elements. It can be understood that, to implement the foregoing functions, the traffic control unit and the vehicle include corresponding hardware structures and/or software modules for performing the functions. With reference to the units and algorithm steps in the examples described in the embodiments disclosed in the present invention, the embodiments of the present invention can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the technical solutions in the present invention.

In the embodiments of the present invention, functional unit division may be performed on the traffic control unit, the vehicle, and the like according to the foregoing method examples. For example, functional units may be obtained through division based on corresponding functions, or two or more functions may be integrated into one processing unit. The integrated unit may be implemented in a form of hardware, or may be implemented in a form of a software functional unit. It should be noted that, in the embodiments of the present invention, unit division is an example, and is merely logical function division. In actual implementation, another division manner may be used.

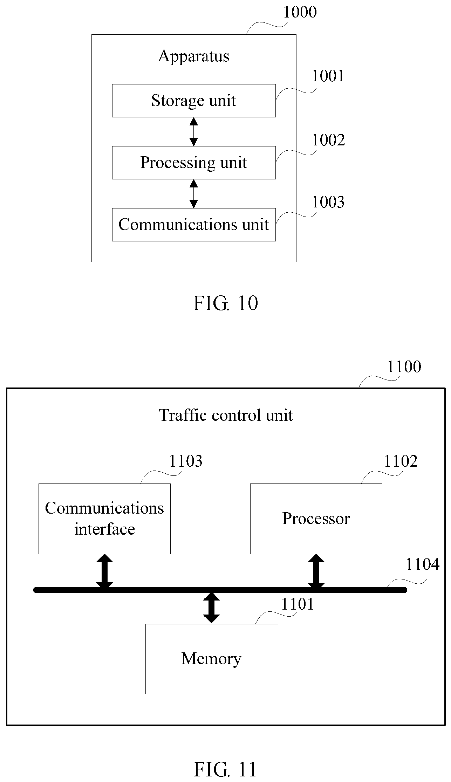

FIG. 10 is a schematic structural diagram of an apparatus according to an embodiment of the present invention. The apparatus may exist in a form of software, may be a traffic control unit, or may be a chip in a traffic control unit. The apparatus 1000 includes a processing unit 1002 and a communications unit 1003. The processing unit 1002 is configured to control and manage an operation of the apparatus 1000. For example, the processing unit 1002 is configured to support the apparatus 1000 in performing step 602 to step 604 and step 607 in FIG. 6, step 802 to step 804 and step 807 in FIG. 8, step 902, step 905, and step 908 in FIG. 9, and/or another process of the technology described in this specification. The communications unit 1003 is configured to support communication between the apparatus 1000 and another network element (such as a first vehicle, another vehicle in a merging area, and a roadside sensor). For example, the communications unit 1003 is configured to support the apparatus 1000 in performing step 605 and step 606 in FIG. 6, step 805 and step 808 in FIG. 8, and step 903, step 906, step 909, and step 911 in FIG. 9. The apparatus 1000 may further include a storage unit 1001 that is configured to store program code and data of the apparatus 1000.

The processing unit 1002 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processing unit 1002 may implement or execute various example logical blocks, modules, and circuits described with reference to content disclosed in the present invention. Alternatively, the processor may be a combination for implementing a computing function, for example, a combination of one or more microprocessors or a combination of the DSP and a microprocessor. The communications unit 1003 may be a communications interface, where the communications interface is a general term. In specific implementation, the communications interface may include a plurality of interfaces. For example, the communications interface may include an interface between a traffic control unit and a first vehicle, an interface between the traffic control unit and a roadside sensor, and/or another interface. The storage unit 1001 may be a memory.

When the processing unit 1002 is a processor, the communications unit 1003 is a communications interface, and the storage unit 1001 is a memory, a structure of the apparatus 1000 in this embodiment of this application may be a structure of a traffic control unit shown in FIG. 11.

FIG. 11 is a possible schematic structural diagram of a traffic control unit according to an embodiment of this application.

As shown in FIG. 11, the traffic control unit 1100 includes a processor 1102, a communications interface 1103, and a memory 1101. Optionally, the traffic control unit 1100 may further include a bus 1104. The communications interface 1103, the processor 1102, and the memory 1101 may be interconnected by using the bus 1104. The bus 1104 may be a peripheral component interconnect (Peripheral Component Interconnect, PCI for short) bus, an extended industry standard architecture (Extended Industry Standard Architecture, EISA for short) bus, or the like. The bus 1104 may be classified into an address bus, a data bus, a control bus, and the like. For ease of representation, only one thick line is used to represent the bus in FIG. 11, but this does not mean that there is only one bus or only one type of bus.

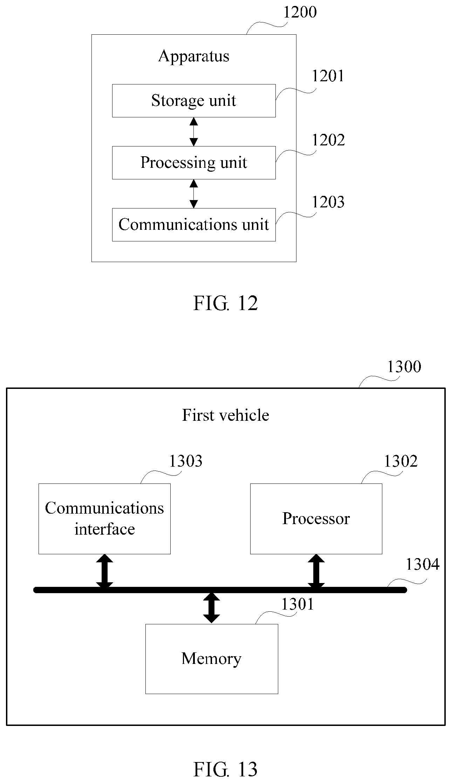

FIG. 12 is a schematic structural diagram of an apparatus according to an embodiment of the present invention. The apparatus may exist in a form of software, may be a first vehicle (or may be any vehicle in a merging area), or may be a chip in a first vehicle. The apparatus 1200 includes a processing unit 1202 and a communications unit 1203. The processing unit 1202 is configured to control and manage an operation of the apparatus 1200. For example, the processing unit 1202 is configured to support the apparatus 1200 in performing step 606 and step 609 in FIG. 6, step 801 and step 810 in FIG. 8, step 901 in FIG. 9, and/or another process of the technology described in this specification. The communications unit 1203 is configured to support communication between the apparatus 1200 and another network element (such as a traffic control unit). For example, the communications unit 1203 is configured to support the apparatus 1200 in performing step 601 in FIG. 6, step 801 and step 810 in FIG. 8, and step 901 in FIG. 9. The apparatus 1200 may further include a storage unit 1201 that is configured to store program code and data of the apparatus 1200.

The processing unit 1202 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processing unit 1202 may implement or execute various example logical blocks, modules, and circuits described with reference to content disclosed in the present invention. Alternatively, the processor may be a combination for implementing a computing function, for example, a combination of one or more microprocessors or a combination of the DSP and a microprocessor. The communications unit 1203 may be a communications interface, where the communications interface is a general term. In specific implementation, the communications interface may include a plurality of interfaces. For example, the communications interface may include an interface between a first vehicle and a traffic control unit and/or another interface. The storage unit 1201 may be a memory.

When the processing unit 1202 is a processor, the communications unit 1203 is a communications interface, and the storage unit 1201 is a memory, a structure of the apparatus 1200 in this embodiment of this application may be a structure of a first vehicle shown in FIG. 13.

FIG. 13 is a possible schematic structural diagram of a first vehicle according to an embodiment of this application.

As shown in FIG. 13, the first vehicle 1300 includes a processor 1302, a communications interface 1303, and a memory 1301. Optionally, the first vehicle 1300 may further include a bus 1304. The communications interface 1303, the processor 1302, and the memory 1301 may be interconnected by using the bus 1304. The bus 1304 may be a peripheral component interconnect (Peripheral Component Interconnect, PCI for short) bus, an extended industry standard architecture (Extended Industry Standard Architecture, EISA for short) bus, or the like. The bus 1304 may be classified into an address bus, a data bus, a control bus, and the like. For ease of representation, only one thick line is used to represent the bus in FIG. 13, but this does not mean that there is only one bus or only one type of bus.

Method or algorithm steps described in combination with the content disclosed in this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may alternatively be a component of the processor. The processor and the storage medium may be located in an ASIC. In addition, the ASIC may be located in an MME, an AMF node, or a terminal. Certainly, the processor and the storage medium may alternatively be located in the MME, the AMF node or the terminal as discrete components.

In the several embodiments provided in this application, it should be understood that the disclosed system, apparatus, and method may be implemented in another manner. For example, the described apparatus embodiment is merely an example. For example, the unit division is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network devices. Some or all of the units may be selected based on actual requirements to achieve the objectives of the solutions of the embodiments.

In addition, functional units in the embodiments of the present invention may be integrated into one processing unit, or each of the functional units may exist independently, or two or more units are integrated into one unit. The integrated unit may be implemented in a form of hardware, or may be implemented in a form of hardware in addition to a software functional unit.

Based on the foregoing descriptions of the implementations, a person skilled in the art may clearly understand that this application may be implemented by software in addition to necessary universal hardware or by hardware. In most circumstances, the former is a preferred implementation. Based on such an understanding, the technical solutions of this application essentially or the part contributing to the prior art may be implemented in a form of a software product. The computer software product is stored in a readable storage medium, such as a floppy disk, a hard disk, or an optical disc of a computer, and includes several instructions for instructing a computer device (which may be a personal computer, a server, a network device, or the like) to perform the methods described in the embodiments of this application.

The foregoing descriptions are merely specific implementations of this application, but are not intended to limit the protection scope of this application. The protection scope of this application shall be subject to the protection scope of the claims.

## Claims

1. A vehicle merging apparatus (1000) for a traffic control unit, comprising: a communications unit (1003) and a processing unit (1002), wherein
the communications unit is configured to receive (602) a merge request from a first vehicle;
the processing unit is configured to: when determining (603) that the communications unit receives the merge request from the first vehicle or that the first vehicle enters a merging area, determine real-time traffic status information based on travel information reported by each vehicle in the merging area and obtain a merging priority of each vehicle in the merging area; determine, based on the real-time traffic status information and the merging priority, whether there is in the merging area a second vehicle whose merging priority is higher than a merging priority of the first vehicle; and if determining that there is in the merging area a second vehicle whose merging priority is higher than the merging priority of the first vehicle, determine (604) a first instruction, wherein the first instruction is used to control the first vehicle to slow down or to stop, so that the second vehicle takes priority to merge;
the communications unit is further configured to send (605) the first instruction determined by the processing unit to the first vehicle;
the processing unit is further configured to: if determining that there is in the merging area no second vehicle whose merging priority is higher than the merging priority of the first vehicle, determine (607) a second instruction, wherein the second instruction is used to control the first vehicle to merge; and
the communications unit is further configured to send (608) the second instruction determined by the processing unit to the first vehicle,
**characterized in that**:
the processing unit (1002) is specifically configured obtain the merging priority of each vehicle by: determining whether a right-of-way level of a lane that the first vehicle is taking is the same as a right-of-way level of a lane that the second vehicle is taking; if determining that the right-of-way level of the lane that the first vehicle is taking is the same as the right-of-way level of the lane that the second vehicle is taking, determining whether a last vehicle that has merged in the merging area drove off the lane that the first vehicle is taking; and if determining that the last vehicle that has merged in the merging area drove off the lane that the first vehicle is taking, determining that the merging priority of the second vehicle is higher than the merging priority of the first vehicle.

2. The apparatus (1000) according to claim 1, wherein
the communications unit (1003) is further configured to receive feedback information from the first vehicle, wherein the feedback information is used to indicate that the first vehicle has merged.

3. A system comprising:a first vehicle merging apparatus according to any of claims 1 to 2, for the traffic control unit;
and a second vehicle merging apparatus (1200) for the first vehicle, comprising: a communications unit (1203) and a processing unit (1202),
wherein the communications unit is configured to: send (601) a merge request to the traffic control unit, and receive (605) a first instruction from the traffic control unit, wherein the first instruction is used to control the first vehicle to slow down or to stop;
the processing unit is configured to control (606) the first vehicle to drive according to the first instruction received by the communications unit;
the communications unit is further configured to receive (608) a second instruction from the traffic control unit, wherein the second instruction is used to control the first vehicle to merge; and
the processing unit is configured to control (609) the first vehicle to drive according to the second instruction received by the communications unit.

4. The system according to claim 3, wherein the communications unit is further configured to send (810) feedback information to the traffic control unit, wherein the feedback information is used to indicate that the first vehicle has merged.

## Patentansprüche

1. Vorrichtung (1000) zur Zusammenführung von Fahrzeugen für eine Verkehrsleiteinheit, umfassend: eine Kommunikationseinheit (1003) und eine Verarbeitungseinheit (1002), wobei die Kommunikationseinheit dazu konfiguriert ist, eine Zusammenführungsanfrage aus einem ersten Fahrzeug zu empfangen (602);
die Verarbeitungseinheit dazu konfiguriert ist: beim Bestimmen (603), dass die Kommunikationseinheit die Zusammenführungsanfrage aus dem ersten Fahrzeug empfängt oder dass das erste Fahrzeug in einen Zusammenführungsbereich fährt, Echtzeit-Verkehrsstatusinformationen basierend auf Fahrtinformationen zu bestimmen, die durch jedes Fahrzeug in dem Zusammenführungsbereich gemeldet werden, und eine Zusammenführungspriorität jedes Fahrzeugs in dem Zusammenführungsbereich zu ermitteln; basierend auf den Echtzeit-Verkehrsstatusinformationen und der Zusammenführungspriorität zu bestimmen, ob sich in dem Zusammenführungsbereich ein zweites Fahrzeug befindet, dessen Zusammenführungspriorität höher als die Zusammenführungspriorität des ersten Fahrzeugs ist; und beim Bestimmen, dass sich in dem Zusammenführungsbereich ein zweites Fahrzeug befindet, dessen Zusammenführungspriorität höher als die Zusammenführungspriorität des ersten Fahrzeugs ist, eine erste Anweisung zu bestimmen (604), wobei die erste Anweisung verwendet wird, um das erste Fahrzeug zum Abbremsen oder Anhalten zu steuern, damit das zweite Fahrzeug Priorität beim Zusammenführen erlangt;
die Kommunikationseinheit ferner dazu konfiguriert ist, die erste Anweisung, die durch die Verarbeitungseinheit bestimmt wird, an das erste Fahrzeug zu senden (605);
die Verarbeitungseinheit ferner dazu konfiguriert ist: beim Bestimmen, dass sich in dem Zusammenführungsbereich kein zweites Fahrzeug befindet, dessen Zusammenführungspriorität höher als die Zusammenführungspriorität des ersten Fahrzeugs ist, eine zweite Anweisung zu bestimmen (607), wobei die zweite Anweisung verwendet wird, um das erste Fahrzeug zum Zusammenführen zu steuern; und
die Kommunikationseinheit ferner dazu konfiguriert ist, die zweite Anweisung, die durch die Verarbeitungseinheit bestimmt wird, an das erste Fahrzeug zu senden (608),
**dadurch gekennzeichnet, dass**:
die Verarbeitungseinheit (1002) speziell dazu konfiguriert ist, die Zusammenführungspriorität jedes Fahrzeugs durch Folgendes zu ermitteln: Bestimmen, ob ein Vorfahrtsniveau einer Fahrspur, die das erste Fahrzeug nimmt, dasselbe wie ein Vorfahrtsniveau einer Fahrspur ist, die das zweite Fahrzeug nimmt; beim Bestimmen, dass das Vorfahrtsniveau der Fahrspur, die das erste Fahrzeug nimmt, dasselbe wie das Vorfahrtsniveau der Fahrspur ist, die das zweite Fahrzeug nimmt, Bestimmen, ob ein letztes Fahrzeug, das in dem Zusammenführungsbereich zusammengeführt wurde, von der Fahrspur, die das erste Fahrzeug nimmt, abgefahren ist; und beim Bestimmen, dass das letzte Fahrzeug, das in dem Zusammenführungsbereich zusammengeführt wurde, von der Fahrspur, die das erste Fahrzeug nimmt, abgefahren ist, Bestimmen, dass die Zusammenführungspriorität des zweiten Fahrzeugs höher als die Zusammenführungspriorität des ersten Fahrzeugs ist.

2. Vorrichtung (1000) nach Anspruch 1, wobei
die Kommunikationseinheit (1003) ferner dazu konfiguriert ist, Rückmeldeinformationen aus dem ersten Fahrzeug zu empfangen, wobei die Rückmeldeinformationen verwendet werden, um anzuzeigen, dass das erste Fahrzeug zusammengeführt wurde.

3. System, umfassend: eine erste Vorrichtung zur Zusammenführung von Fahrzeugen nach einem der Ansprüche 1 bis 2 für die Verkehrsleiteinheit;
und eine zweite Vorrichtung (1200) zur Zusammenführung von Fahrzeugen für das erste Fahrzeug, umfassend: eine Kommunikationseinheit (1203) und eine Verarbeitungseinheit (1202),
wobei die Kommunikationseinheit dazu konfiguriert ist: eine Zusammenführungsanfrage an die Verkehrsleiteinheit zu senden (601) und eine erste Anweisung aus der Verkehrsleiteinheit zu empfangen (605), wobei die erste Anweisung verwendet wird, um das erste Fahrzeug zum Abbremsen oder Anhalten zu steuern;
die Verarbeitungseinheit dazu konfiguriert ist, das erste Fahrzeug zu steuern (606), damit es gemäß der ersten Anweisung fährt, die durch die Kommunikationseinheit empfangen wird;
die Kommunikationseinheit ferner dazu konfiguriert ist, eine zweite Anweisung aus der Verkehrsleiteinheit zu empfangen (608), wobei die zweite Anweisung verwendet wird, um das erste Fahrzeug zum Zusammenführen zu steuern; und
die Verarbeitungseinheit dazu konfiguriert ist, das erste Fahrzeug zu steuern (609), damit es gemäß der zweiten Anweisung fährt, die durch die Kommunikationseinheit empfangen wird.

4. System nach Anspruch 3, wobei die Kommunikationseinheit ferner dazu konfiguriert ist, Rückmeldeinformationen an die Verkehrsleiteinheit zu senden (810), wobei die Rückmeldeinformationen verwendet werden, um anzuzeigen, dass das erste Fahrzeug zusammengeführt wurde.

## Revendications

1. Appareil d'insertion de véhicules (1000) pour une unité de contrôle du trafic, comprenant : une unité de communication (1003) et une unité de traitement (1002), dans lequel
l'unité de communication est configurée pour recevoir (602) une demande d'insertion en provenance d'un premier véhicule ;
l'unité de traitement est configurée pour : lorsqu'il est déterminé (603) que l'unité de communication reçoit la demande d'insertion en provenance du premier véhicule ou que le premier véhicule entre dans une zone d'insertion, déterminer des informations en temps réel sur l'état du trafic sur la base d'informations de déplacement rapportées par chaque véhicule dans la zone d'insertion et obtenir une priorité d'insertion de chaque véhicule dans la zone d'insertion ; déterminer, sur la base d'informations en temps réel sur l'état du trafic et de la priorité d'insertion, s'il existe dans la zone d'insertion un second véhicule dont la priorité d'insertion est supérieure à celle du premier véhicule ; et déterminer qu'il existe dans la zone d'insertion un second véhicule dont la priorité d'insertion est supérieure à celle du premier véhicule, déterminer (604) une première instruction, dans lequel la première instruction est utilisée pour commander au premier véhicule de ralentir ou de s'arrêter, afin que le second véhicule ait la priorité pour s'insérer ;
l'unité de communication est en outre configurée pour envoyer (605) la première instruction déterminée par l'unité de traitement au premier véhicule ;
l'unité de traitement est en outre configurée pour : s'il est déterminé qu'il n'existe dans la zone d'insertion aucun second véhicule dont la priorité d'insertion est supérieure à la priorité d'insertion du premier véhicule, déterminer (607) une seconde instruction, dans lequel la seconde instruction est utilisée pour commander l'insertion du premier véhicule ; et l'unité de communication est en outre configurée pour envoyer (608) la seconde instruction déterminée par l'unité de traitement au premier véhicule,
**caractérisé en ce que** :
l'unité de traitement (1002) est spécifiquement configurée pour obtenir la priorité d'insertion de chaque véhicule : en déterminant si un niveau de priorité d'une voie empruntée par le premier véhicule est le même que le niveau de priorité d'une voie empruntée par le second véhicule ; s'il est déterminé que le niveau de priorité de la voie empruntée par le premier véhicule est le même que le niveau de priorité de la voie empruntée par le second véhicule, en déterminant si un dernier véhicule qui s'est inséré dans la zone d'insertion a quitté la voie empruntée par le premier véhicule ; et s'il est déterminé que le dernier véhicule qui s'est inséré dans la zone d'insertion a quitté la voie empruntée par le premier véhicule, en déterminant que la priorité d'insertion du second véhicule est supérieure à la priorité d'insertion du premier véhicule.

2. Appareil (1000) selon la revendication 1, dans lequel
l'unité de communication (1003) est en outre configurée pour recevoir des informations de retour en provenance du premier véhicule, dans lequel les informations de retour sont utilisées pour indiquer que le premier véhicule s'est inséré.

3. Système comprenant : un premier appareil d'insertion de véhicules selon l'une quelconque des revendications 1 et 2, pour l'unité de contrôle du trafic ;
et un second appareil d'insertion de véhicules (1200) pour le premier véhicule, comprenant : une unité de communication (1203) et une unité de traitement (1202),
dans lequel l'unité de communication est configurée pour : envoyer (601) une demande d'insertion à l'unité de contrôle du trafic et recevoir (605) une première instruction en provenance de l'unité de contrôle du trafic, dans lequel la première instruction est utilisée pour commander au premier véhicule de ralentir ou de s'arrêter ;
l'unité de traitement est configurée pour commander (606) au premier véhicule de conduire selon la première instruction reçue par l'unité de communication ;
l'unité de communication est en outre configurée pour recevoir (608) une seconde instruction en provenance de l'unité de contrôle du trafic, dans lequel la seconde instruction est utilisée pour commander au premier véhicule de s'insérer ; et
l'unité de traitement est configurée pour commander (609) au premier véhicule de conduire selon la seconde instruction reçue par l'unité de communication.

4. Système selon la revendication 3, dans lequel l'unité de communication est en outre configurée pour envoyer (810) des informations de retour à l'unité de contrôle du trafic, dans lequel les informations de retour sont utilisées pour indiquer que le premier véhicule s'est inséré.
